# EUROPEAN PATENT APPLICATION

(11) **EP 4 425 648 A1**
(43) Date of publication of application: **04.09.2024**
(21) Application number: 23216292.5
(22) Date of filing: 13.12.2023
(51) Int. Cl.: H01M 10/613, H01M 10/6551, H01M 10/6552, H01M 10/6553, H01M 10/6556, H01M 10/6568, H01M 10/6569, H01M 50/503

(54) **A BATTERY PACK**

(30) Priority: 14.12.2022 IN 202241072426
(71) Applicant: TVS Motor Company Limited, Chennai 600 006, Tamil Nadu (IN)
(72) Inventor: KUSHWAHA, SUDHIR KUMAR, 600 006 Chennai (IN); BHAGAWAT, GAVHANE SANTOSH, 600 006 Chennai (IN); POREDDY, KAMBI REDDY, 600 006 Chennai (IN); GARG, MANISH, 600 006 Chennai (IN); SRINIVASAN, RAGAVENDRA, 600 006 Chennai (IN)
(74) Representative: Tobiasz-Dumania, Katarzyna

(57) **Abstract**

The present invention relates to a battery pack (10). The battery pack (10) includes a casing (20). The casing (20) encloses a plurality of battery cells. The battery pack further includes at least one busbar (30) being employed to electrically interconnect two or more of the plurality of battery cells. A heat pipe (40) is integrated with the at least one busbar (30). The heat pipe (40) is adapted to uniformly dissipate heat from the busbar (30) and the corresponding battery cells electrically connected by the busbar (30).

## Description

### FIELD OF THE INVENTION

The present invention generally relates to a battery pack and more particularly relates to a system for cooling battery cells of the battery pack.

### BACKGROUND OF THE INVENTION

A battery pack includes several battery cells interconnected to each other. The battery pack achieves desired voltage by connecting several battery cells in series, such that each battery cell adds its voltage potential to derive the total terminal voltage of the battery pack. Similarly, the battery pack achieves desired current by connecting several battery cells in parallel. The use of battery packs as an energy source is becoming prevalent in all parts of the world because of advantages offered by stored electrical energy when compared to especially energy generated via fossil fuel powered internal combustion engines. Thus, battery packs are being used to power a variety of electrical and electronic devices including for power intensive applications like powering automobiles, work machines and power tools.

The battery pack is the energy source of an electric vehicle which provides the required electrical energy to propel the vehicle and power its auxiliary components. During charging and discharging cycles of the battery pack, the battery cells of the battery pack release a significant amount of heat which causes them to heat up. Higher temperatures are detrimental to the health of the battery cells as battery cell heating leads to faster capacity degradation and is likely to cause thermal runaway. Capacity degradation of the battery cells reduces performance and longevity of the battery pack. Thermal runaway of the battery cells further poses a huge safety risk as it could lead to fire and explosion of the battery pack. Ideally the battery cells need to be maintained between 25 degrees Celsius and 45 degrees Celsius for optimum performance, longevity and safety, regardless of ambient thermal conditions. To ensure safe operation of the battery cells and optimum battery life, it is important to maintain uniform temperature across the battery cells and optimum thermal condition in the battery pack overall.

Generally, two types of cooling systems are employed for cooling the battery pack, i.e., active cooling and passive cooling. Larger capacity battery packs generate more heat and employs active cooling means to maintain its temperature below the upper threshold limit. However, conventional systems of cooling the battery pack like direct immersion cooling have reduced cooling efficiency due to higher thermal resistance between the battery cells and a heat sink that absorbs and dissipates the heat generated in the battery cells. That is, thermal conductance between surfaces of the battery cells and the heat sink in thermal contact with each other is poor. Further, active cooling means like direct immersion cooling adds to the complexity of the battery pack design, and increases weight of the system.

Conventionally, a plurality of busbars or interconnects is employed for electrically interconnecting the battery cells of the battery pack. In the art, the busbars are only configured to conduct electricity, and it is usually not feasible for the busbars to effectively dissipate heat because of a high charge flowing through the busbars. Further, localized heating of the battery cells across the busbar could cause damage to a select few battery cells directly affected by the heating, which renders the whole battery pack ineffective, although most of the battery cells apart from the select few continue to operate adequately. Existing cooling systems of the battery pack also do not cool the battery cells uniformly. Furthermore, battery cooling systems are extraneous to the battery pack, making the battery pack huge, thus rendering manufacturability, ease of assembly, and serviceability of the battery pack cumbersome.

Thus, there is a need in the art for a battery pack having an efficient cooling system capable of uniformly cooling the battery cells of the battery pack, which addresses at least the aforementioned problems and limitations.

### SUMMARY OF THE INVENTION

In one aspect, the present invention is directed to a battery pack. The battery pack includes a casing, and a plurality of battery cells disposed inside the casing. The battery pack also includes at least one busbar to electrically interconnect two or more of the plurality of battery cells. A heat pipe is integrated with the at least one busbar. The heat pipe is adapted to uniformly dissipate heat from the busbar and the corresponding battery cells electrically connected by the busbar.

In an embodiment, the heat pipe is disposed on a first surface of the at least one busbar. The heat pipe and the busbar are fused together to enable maximum surface contact between them. In an embodiment, the heat pipe has a lower surface area than the busbar such that an area of surface contact between the busbar and the heat pipe is lesser than an area of the first surface of the busbar. In another embodiment, the heat pipe and the busbar have same surface area such that an area of surface contact between the busbar and the heat pipe is equal to an area of the first surface of the busbar.

In an embodiment, a thermal paste is disposed at an interface between the heat pipe and the busbar for effective heat dissipation.

In an embodiment, the busbar includes a plurality of first leads. The plurality of first leads project towards the plurality of battery cells. The plurality of first leads is adapted to establish electrical contact and thermal contact with terminals of the corresponding battery cells electrically connected by the busbar.

In an embodiment, the heat pipe includes a plurality of second leads corresponding to the plurality of first leads. The plurality of second leads is adapted to establish thermal contact with the corresponding first leads.

In yet another embodiment, the heat pipe is disposed internally of the at least one busbar. The busbar is adapted to simultaneously conduct electric current between the corresponding battery cells electrically connected by the busbar and uniformly dissipate heat from the corresponding battery cells electrically connected by the busbar.

In an embodiment, the busbar includes a plurality of first leads. The plurality of first leads project towards the plurality of battery cells. The plurality first leads is adapted to simultaneously establish electrical contact and thermal contact with terminals of the corresponding battery cells electrically connected by the busbar.

In a further embodiment, the battery pack includes at least one cooling tube. The at least one cooling tube is adapted to dissipate heat from the heat pipe integrated with the at least one busbar to an exterior of the casing via a coolant flowing through the at least one cooling tube. In an embodiment, the at least one cooling tube has an inlet and an outlet. A portion of the at least one cooling tube between the inlet and the outlet is disposed inside the casing. The coolant enters the at least one cooling tube via the inlet and exits the at least one cooling tube via the outlet. The coolant is adapted to absorb heat from the heat pipe.

In another embodiment, the battery pack includes a pair of the cooling tubes, such that the pair of cooling tubes are disposed at opposite ends of the casing. In yet another embodiment, the battery pack includes a plurality of connecting pipes which interconnect the pair of cooling tubes to enable flow of the coolant between the pair of cooling tubes. At least one of the plurality of connecting pipes is disposed on the heat pipe integrated with the at least one busbar. The plurality of connecting pipes is adapted to be in thermal communication with the heat pipe.

In an embodiment, the at least one busbar includes an internal conduit overlapping with the heat pipe which is disposed internally of the busbar. The internal conduit is in thermal communication with the heat pipe, and the internal conduit is adapted to enable the coolant flowing through the cooling tube to flow through the internal conduit. In an embodiment, the internal conduit includes a plurality of perforations. The plurality of perforations is adapted to enable ingress of the coolant into and egress of the coolant out of the internal conduit. Further, the coolant flowing through the internal conduit absorbs heat from the heat pipe.

In an embodiment, the heat pipe includes one or more internal channels. The one or more internal channels are adapted to allow flow of a working fluid of the heat pipe. In another embodiment, the one or more internal channels of the heat pipe are in thermal communication with the at least one cooling tube.

In a further embodiment, the casing includes a plurality of fins projecting outwardly of the casing. The plurality of fins is adapted to dissipate heat from the heat pipe to an exterior of the casing.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a front perspective view of an exemplary battery pack, in accordance with an embodiment of the present invention.
Figure 2 illustrates a side elevation view of a partially opened battery pack showing a plurality of exemplary busbars and heat pipes, in accordance with an embodiment of the present invention.
Figure 3 illustrates an elevation view and a magnified view of the busbar and the heat pipe of the battery pack illustrated in Figure 2, in accordance with an embodiment of the present invention.
Figure 4 illustrates an elevation view and a magnified view of the busbar and the heat pipe of the battery pack illustrated in Figure 2, in accordance with an embodiment of the present invention.
Figure 5 illustrates an elevation view of the busbar and the heat pipe of the battery pack, in accordance with an embodiment of the present invention.
Figure 6 illustrates a side elevation view of the battery pack illustrated in Figure 2 showing the plurality of busbars and heat pipes and an exemplary cooling tube, in accordance with an embodiment of the present invention.
Figure 7 illustrates a side elevation view of the battery pack illustrated in Figure 2 showing the plurality of busbars and heat pipes and a pair of the cooling tubes, in accordance with an embodiment of the present invention.
Figure 8 illustrates a side elevation view of the battery pack showing the plurality of busbars and heat pipes and the cooling tube, in accordance with an embodiment of the present invention.
Figure 9 illustrates elevation views of the busbar, the heat pipe and the cooling tube of the battery pack illustrated in Figure 8, in accordance with an embodiment of the present invention.
Figure 10 illustrates a side elevation view of the battery pack showing the plurality of busbars having integrally formed heat pipes, in accordance with an embodiment of the present invention.
Figure 11 illustrates a side elevation view of the battery pack illustrated in Figure 10 showing a pair of the cooling tubes and the plurality of busbars having integrally formed heat pipes, in accordance with an embodiment of the present invention.
Figure 12 illustrates elevation views of the busbar having integrally formed heat pipes, an exemplary internal conduit of the busbar and the pair of the cooling tubes of the battery pack illustrated in Figure 11, in accordance with an embodiment of the present invention.
Figure 13 illustrates elevation views of the busbar, the heat pipe, the pair of the cooling tubes and an exemplary connecting pipe of the battery pack, in accordance with an embodiment of the present invention.
Figure 14 illustrates an elevation view and a top view of the heat pipe and the cooling tube, in accordance with an embodiment of the present invention.

### DETAILED DESCRIPTION OF THE INVENTION

Various features and embodiments of the present invention here will be discernible from the following further description thereof, set out hereunder.

The present invention generally relates to a battery pack and more particularly relates to a system for cooling battery cells of the battery pack. In the ensuing exemplary embodiments, the battery pack is illustrated to have a substantially cuboidal shape. However, it is contemplated that the disclosure in the present invention may be applied to any type of battery pack capable of accommodating the present subject matter without defeating the scope of the present invention.

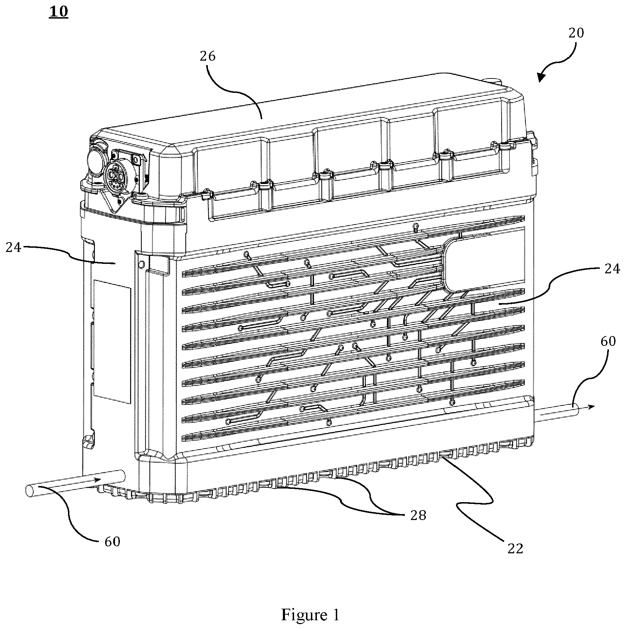

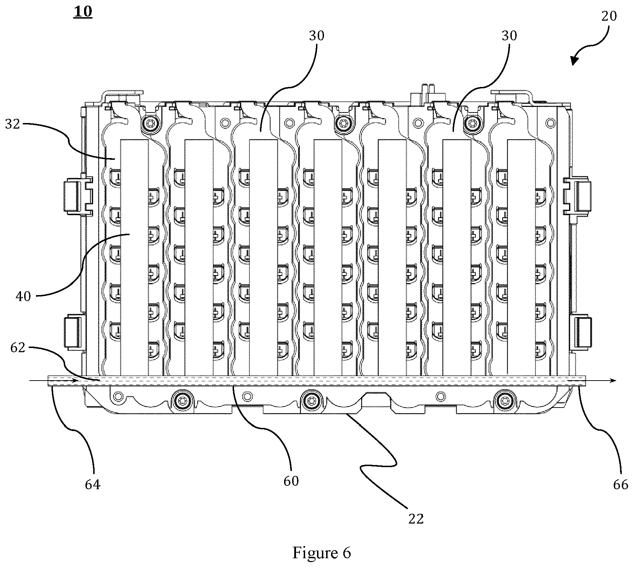

Figure 1 illustrates a front perspective view of an exemplary battery pack 10, in accordance with an embodiment of the present subject matter. The battery pack 10 includes a casing 20. The casing 20 is formed of a base wall 22, one or more side walls 24, and a top wall 26. In the illustrated embodiment, there are four side walls 24. The casing 20 encloses a plurality of battery cells (not shown) of the battery pack 10. In an embodiment, the casing 20 includes a plurality of fins 28 projecting outwardly of the casing 20. The plurality of fins 28 is adapted to dissipate heat from the battery pack 10 to an ambient environment. In the illustrated embodiment, the plurality of fins 28 is provided on the base wall 22. In another embodiment, the plurality of fins 28 may be provided on the one or more side walls 24 or the top wall 26. In an embodiment, the battery pack 10 includes at least one cooling tube 60. In the illustrated embodiment, a single cooling tube 60 is provided. The cooling tube 60 is adapted to enable flow of a coolant 62 (shown in Figure 6) through the cooling tube 60. The coolant 62 absorbs heat generated inside the battery pack 10 and dissipates it to an ambient environment. An evaporator portion of the cooling tube 60 is disposed inside the casing 20, and a condenser portion of the cooling tube 60 is disposed externally of the casing 20.

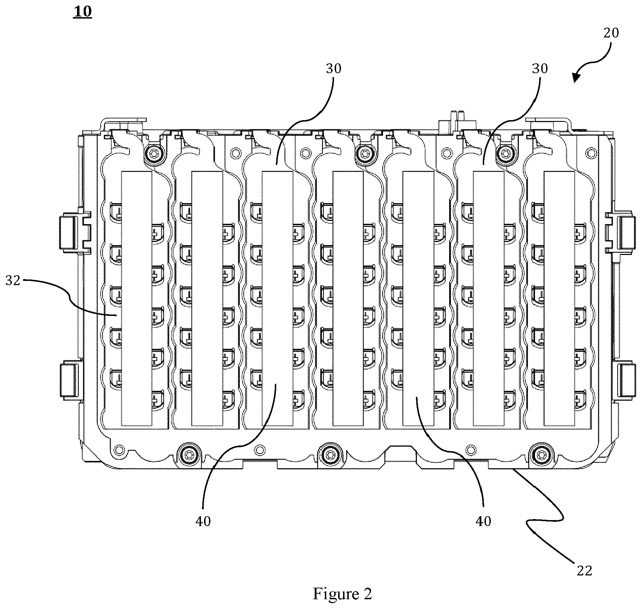

Figure 2 illustrates a side elevation view of a partially opened battery pack 10 showing a plurality of exemplary busbars 30 and heat pipes 40, in accordance with an embodiment of the present subject matter. The battery pack 10 includes at least one busbar 30 to electrically interconnect two or more of the plurality of battery cells. In an embodiment, the plurality of battery cells of the battery pack 10 is arranged in one or more cell stacks. One busbar 30 is adapted to electrically interconnect the battery cells of one cell stack. The battery pack 10 also includes one or more heat pipes 40. Each heat pipe 40 is integrated with a corresponding busbar 30. In an embodiment, the heat pipe 40 is joined to the busbar 30 through welding or any other similar process known in the art. The heat pipe 40 is adapted to uniformly dissipate heat from the busbar 30 and the corresponding battery cells electrically connected by the busbar 30. In an embodiment, the busbar 30 has a first surface 32. The first surface 32 is opposite a surface of the busbar 30 that faces the plurality of battery cells. In an embodiment, the heat pipe 40 is disposed on the first surface 32 of the busbar 30, i.e., the busbar 30 is disposed between the plurality of battery cells and the heat pipe 40. In another embodiment, the heat pipe 40 and the busbar 30 are fused together to enable maximum surface contact between them. The heat pipe 40 and the busbar 30 are fused together, i.e., mechanically joined together by means of welding, brazing, etc. or any other joining method known in the art. By maximizing the surface contact between the heat pipe 40 and the busbar 30 maximum heat dissipation can be achieved. In an embodiment, the heat pipe 40 has a lower surface area than the busbar 30, such that an area of surface contact between the busbar 30 and the heat pipe 40 is lesser than an area of the first surface 32 of the busbar 30. Thus, the heat pipe 40 does not overlap with the whole first surface 32 of the busbar 30. In the illustrated embodiment of Figure 2, the area of surface contact between the busbar 30 and the heat pipe 40 is lesser than an area of the first surface 32 of the busbar 30.

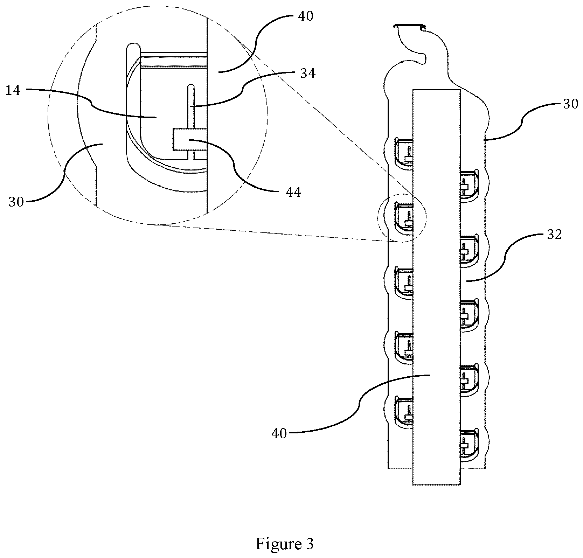

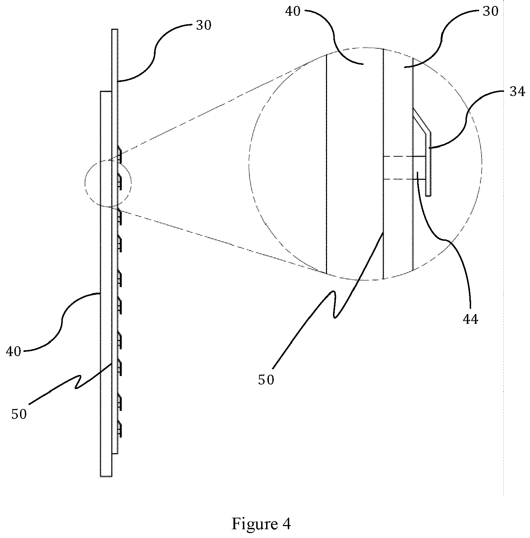

Figure 3 illustrates an elevation view and a magnified view of the busbar 30 and the heat pipe 40 of the battery pack 10 illustrated in Figure 2, in accordance with an embodiment of the present subject matter. Figure 4 illustrates an elevation view and a magnified view of another side of the busbar 30 and the heat pipe 40 of the battery pack 10 illustrated in Figure 2, in accordance with an embodiment of the present subject matter. Referring to Figures 3 and 4, the busbar 30 includes a plurality of first leads 34. The first leads 34 project towards the plurality of battery cells and are adapted to establish electrical contact and thermal contact with terminals of the corresponding battery cells electrically connected by the busbar 30. The number of first leads 34 of each busbar 30 is equal to the number of battery cells that are in electrical contact with the busbar 30. The plurality of first leads 34 provides physical contact between the busbar 30 and the plurality of battery cells. In an embodiment, the heat pipe 40 includes a plurality of second leads 44 which are adapted to establish thermal contact with the corresponding first leads 34 of the busbar 30. One second lead 44 is provided on the heat pipe 40 corresponding to each of the plurality of first leads 34. In an embodiment, the first leads 34 and the second leads 44 are maintained in physical contact with one another so that heat can dissipate from the first leads 34 to the second leads 44. In another embodiment, the terminals 14 of the battery cells, the first leads 34 of the busbar 30 and the second leads 44 of the heat pipe 40 are in physical contact with one another so that heat can dissipate from the battery cells and the busbar 30 to the corresponding heat pipe 40.

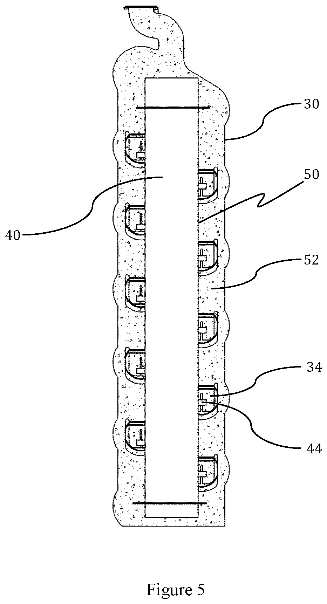

Figure 5 illustrates an elevation view of the busbar 30 and the heat pipe 40 of the battery pack 10, in accordance with an embodiment of the present subject matter. Referring to Figure 5, an interface 50 is defined between the busbar 30 and the heat pipe 40 disposed on the first surface 32 of the busbar 30. In an embodiment, a thermal paste 52 is applied at the interface 50 between the heat pipe 40 and the busbar 30. The thermal paste 52 aids in achieving maximum contact area between the heat pipe 40 and the busbar 30 and allows for effective heat dissipation.

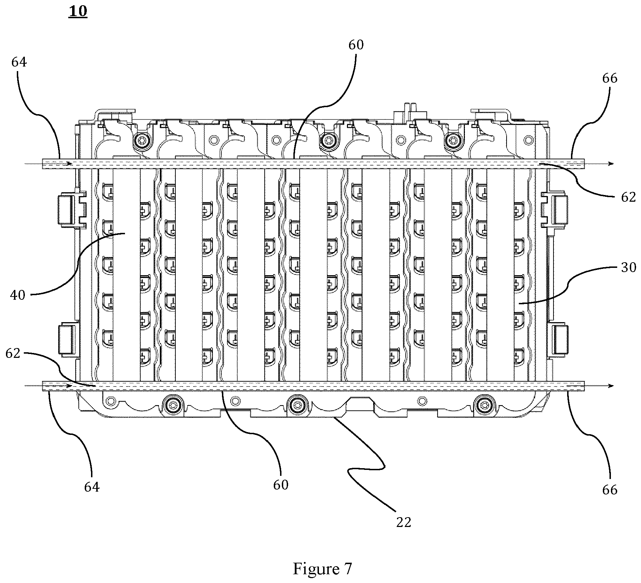

Figure 6 illustrates a side elevation view of the battery pack 10 illustrated in Figure 2 showing the plurality of busbars 30 and heat pipes 40 and an exemplary cooling tube 60, in accordance with an embodiment of the present subject matter. Figure 7 illustrates a side elevation view of the battery pack 10 illustrated in Figure 2 showing the plurality of busbars 30 and heat pipes 40 and a pair of the cooling tubes 60, in accordance with an embodiment of the present subject matter. Referring to Figures 6 and 7, the cooling tube 60 is adapted to dissipate heat from the heat pipe 40, which is integrated with the corresponding busbar 30, to an exterior of the casing 20 via the coolant 62 flowing through the cooling tube 60. The cooling tube 60 includes an inlet 64 and an outlet 66. The coolant 62 enters the cooling tube 60 via the inlet 64 and exits the cooling tube 60 via the outlet 66. A portion of the cooling tube 60 between the inlet 64 and the outlet 66 is disposed inside the casing 20. The coolant 62 when flowing through this portion of the cooling tube 60 disposed inside the casing 20 absorbs heat from the plurality of heat pipes 40. The cooling tube 60 is in thermal contact with the plurality of heat pipes 40 such that heat can be effectively dissipated from the heat pipe 40 and the busbar 30 to the heat pipes 40. In the illustrated embodiments, the cooling tube 60 is in physical contact with the heat pipes 40 of the battery pack 10 at an end of each of the corresponding heat pipes 40. In an alternate embodiment, the plurality of fins 28 (shown in Figure 1) projecting outwardly of the casing 20 is adapted to dissipate heat from the heat pipe 40 to an exterior of the casing 20.

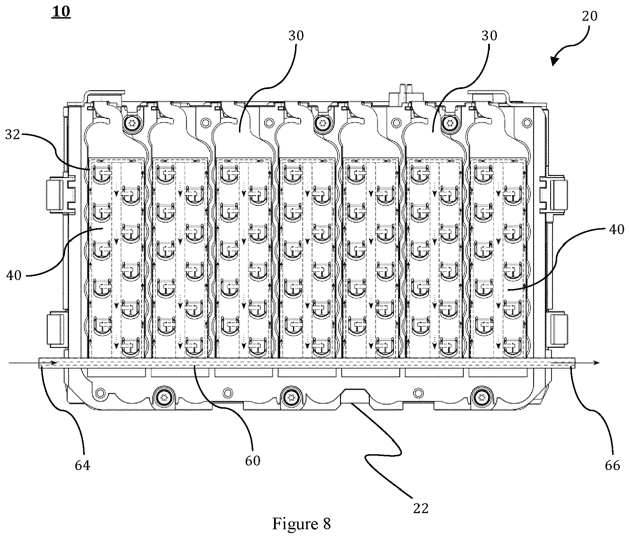

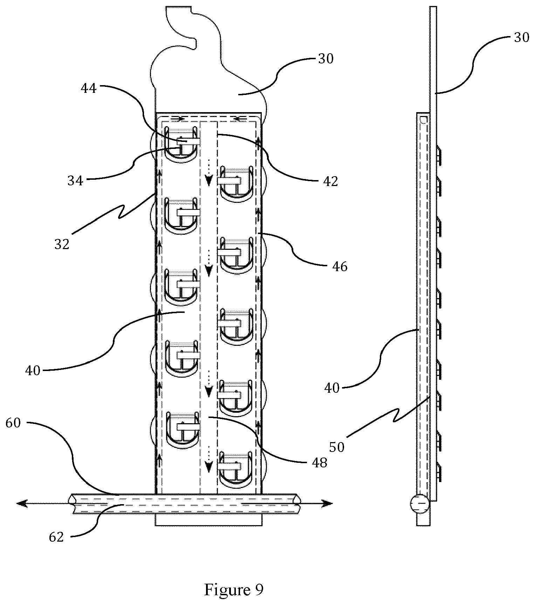

Figure 8 illustrates a side elevation view of the battery pack 10 showing the plurality of busbars 30 and heat pipes 40 and the cooling tube 60, in accordance with an embodiment of the present subject matter. Figure 9 illustrates elevation views of the busbar 30, the heat pipe 40 and the cooling tube 60 of the battery pack 10 illustrated in Figure 8, in accordance with an embodiment of the present subject matter. In an alternate embodiment according to Figures 8 and 9, the heat pipe 40 and the busbar 30 have same surface area such that the area of surface contact between the busbar 30 and the heat pipe 40 is equal to the area of the first surface 32 of the busbar 30. Thus, the heat pipe 40 overlaps with the whole first surface 32 of the busbar 30. This provides a greater area for thermal contact between the busbar 30 and the heat pipe 40 enabling greater heat dissipation. Further, the larger size of the heat pipe 40 allows for a higher heat absorption capacity resulting in more uniform heat dissipation from the plurality of battery cells of the battery pack 10.

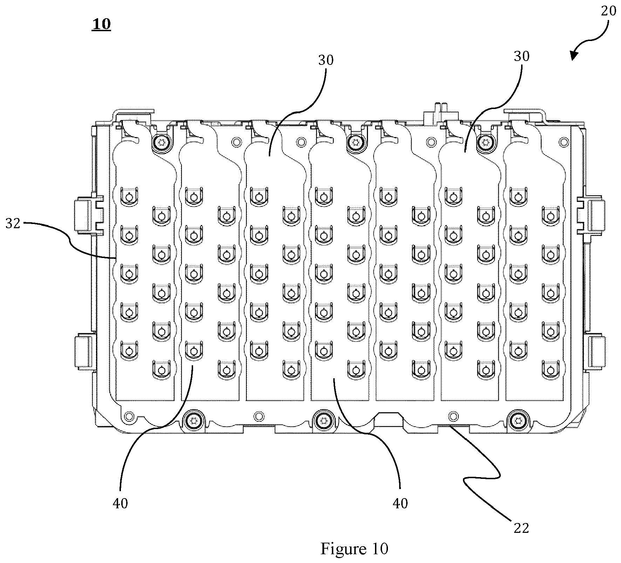

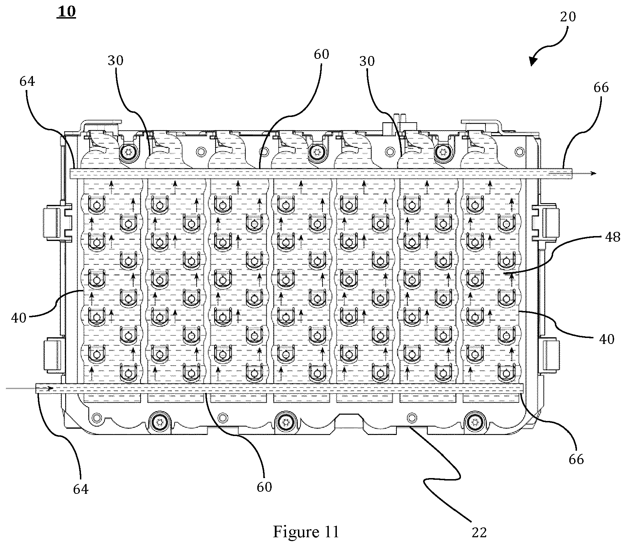

Figure 10 illustrates a side elevation view of the battery pack 10 showing the plurality of busbars 30 having integrally formed heat pipes 40, in accordance with an embodiment of the present subject matter. In the illustrated embodiment, the heat pipe 40 is disposed internally of the busbar 30. Figure 11 illustrates a side elevation view of the battery pack 10 illustrated in Figure 10 showing a pair of the cooling tubes 60 and the plurality of busbars 30 having integrally formed heat pipes 40, in accordance with an embodiment of the present subject matter. In the embodiments of Figures 10 and 11, the busbar 30 is adapted to conduct electric current between the corresponding battery cells electrically connected by the busbar 30 and uniformly dissipate heat from the corresponding battery cells electrically connected by the busbar 30 simultaneously. In an embodiment, an interior of the busbar 30 is machined to incorporate a heat pipe 40 within it. In another embodiment, the busbar 30 may be designed to have a cavity within it and a heat pipe 40 can be disposed within the cavity. Thus, the busbar 30 also acts as the heat pipe 40. In this embodiment, the heat pipe 40 and the bus bar 30 are integrated or irreversibly fused with each other.

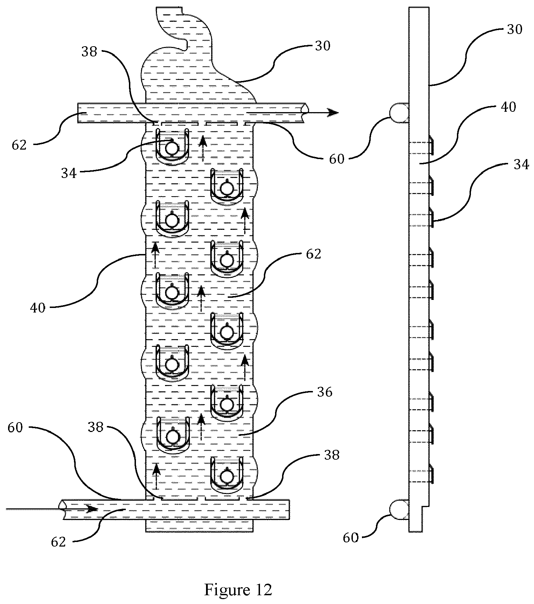

Figure 12 illustrates elevation views of the busbar 30 having integrally formed heat pipes 40, an exemplary internal conduit 36 of the busbar 30 and the pair of the cooling tubes 60 of the battery pack 10 illustrated in Figure 11, in accordance with an embodiment of the present subject matter. In the illustrated embodiment, the busbar 30 includes the plurality of first leads 34. The plurality of first leads 34 project towards the plurality of battery cells to be in thermal contact and electrical contact with the corresponding battery cells electrically connected by the said busbar 30. In an embodiment, the first leads 34 are adapted to establish electrical contact and thermal contact with terminals 14 of the corresponding battery cells by being in physical contact with the said terminals. By having integrally formed heat pipes 40 within the busbars 30, the heat dissipation is increased and the number of parts of the battery pack 10 decreased, leading to better thermal performance and sturdiness. In an alternate embodiment, the at least one busbar 30 includes an internal conduit 36 overlapping with the heat pipe 40. The internal conduit 36 and the heat pipe 40 are disposed inside the busbar 30, such that the internal conduit 36 is upwardly of the heat pipe 40. The internal conduit 36 is in thermal communication with the heat pipe 40. Further, the internal conduit 36 is adapted to enable the coolant 62 flowing through the cooling tube 60 to flow through the internal conduit 36. Thus, the heat pipe 40 can dissipate heat to the coolant 62 flowing through the internal conduit 36. In an embodiment, the internal conduit 36 includes a plurality of perforations 38. The plurality of perforations 38 enables ingress of the coolant 62 into the internal conduit 36 and egress of the coolant 62 out of the internal conduit 36 from the cooling tube 60.

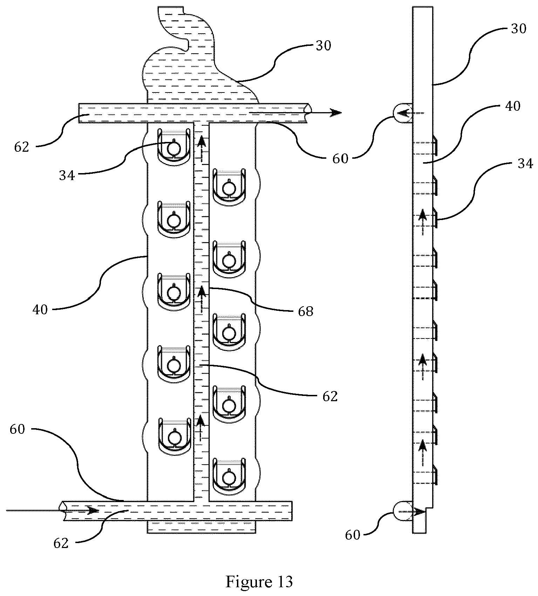

Figure 13 illustrates elevation views of the busbar 30, the heat pipe 40, the pair of the cooling tubes 60 and an exemplary connecting pipe 68 of the battery pack 10, in accordance with an embodiment of the present subject matter. In the illustrated embodiment, the pair of cooling tubes 60 are disposed at opposite ends of the casing 20. One cooling tube 60 is placed in proximity to the base wall 22 and the other cooling tube 60 is placed in proximity to the top wall 26 of the battery pack 10. In an embodiment, a plurality of connecting pipes 68 which interconnect the pair of cooling tubes 60 are provided. The plurality of connecting pipes 68 enables flow of the coolant 62 between the pair of cooling tubes 60. At least one of the plurality of connecting pipes 68 is disposed on each of the heat pipes 40 integrated with the busbar 30 and the plurality of connecting pipes 68 is adapted to be in thermal communication with the heat pipe 40. In the illustrated embodiment, one connecting pipe 68 is disposed on one heat pipe 40. This allows for greater heat dissipation from the heat pipe 40 as now the coolant 62 can absorb heat along a length of the heat pipe 40 as opposed to just the ends.

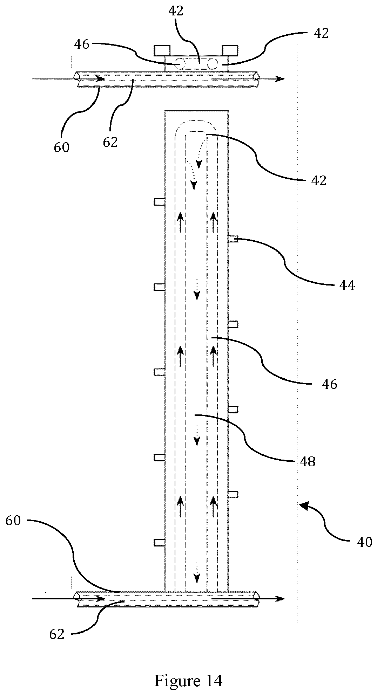

Figure 14 illustrates an elevation view and a top view of the heat pipe 40 and the cooling tube 60, in accordance with an embodiment of the present subject matter. Referring to Figures 9 and 14, the heat pipe 40 includes one or more internal channels 42. The one or more internal channels 42 is adapted to allow flow of a working fluid 48 of the heat pipe 40. In an embodiment, the one or more internal channels 42 of the heat pipe 40 is in thermal communication with the cooling tube 60. The working fluid 48 of the heat pipe 40 is adapted to change its phase from liquid to gas for heat absorption at a constant temperature. This allows for uniform cooling of the battery cells electrically connected to the busbar 30 coupled with the corresponding heat pipe 40.

In an embodiment, the heat pipe 40 includes a wick 46 along a periphery of the one or more internal channels 42. The wick 46 is adapted to transport the working fluid 48 in its condensed form from zones of heat dissipation to zones of heat absorption in the heat pipe 40. Thus, the working fluid 48 flows through the one or more internal channels 42 absorbing heat and converting into vapour form. At the areas where the heat pipe 40 is in thermal communication with the cooling tube 60, the working fluid 48 condenses into liquid form and is returned to the heat absorption zones via the wick 46 due to capillary action. In another embodiment, the one or more internal channels 42 of the heat pipe 40 are sealed to isolate the working fluid 48. This prevents contaminants from leaking into the internal channels 42 and prevents the working fluid 48 from leaking out of the internal channels 42. In yet another embodiment, the working fluid 48 is a dielectric fluid. Use of the dielectric fluid as the working fluid 48 allows for effective heat dissipation from the busbar 30 without interfering with the electricity transmitted through the busbar 30.

Advantageously, the present claimed invention provides a battery pack and a system for cooling battery cells of the battery pack. The claimed configurations of the battery pack as discussed above are not routine, conventional, or well understood in the art, as the claimed configurations of the battery pack enable the following solutions to the existing problems in conventional technologies. Specifically, the battery pack achieves efficient and effective cooling of the battery cells of the battery pack, thereby increasing battery performance, longevity and safety. Effective and uniform cooling of each and every battery cell of the battery pack is achieved as the busbar is in direct thermal contact with the battery cells. In one of the embodiments disclosed, an external coolant circuit need not be placed in proximity to the current conducting busbar since a separate heat pipe is provided to dissipate heat directly from the busbar. The coolant circuit may be thermally coupled with the heat pipe rather than the busbar. Further, the heat pipe has a sealed circuit where a dielectric working fluid circulates, and the coolant circuit is separate from the heat pipe circuit. This eliminates chances of liquid of leakage into the battery pack and reduces risk of short circuit. The dielectric working fluid inside the heat pipe does not affect, nor gets affected by transmission of electric current through the busbar. Furthermore, the proposed invention offers design solutions where the busbar can be separately cooled by a heat sink, and may or may not involve a liquid based heat radiating circuit, and may or may not include further radiation mechanisms like fins or fans or radiator units. Integrating the busbar with the heat pipe allows for reducing the number of parts required for the battery pack as a whole without compromising on the cooling efficiency of the battery pack. The battery pack disclosed also improves ease of assembly and serviceability and allows for use of common parts thus lowering overall costs. Furthermore, cooling of other related components of the battery pack disposed inside the casing, like a Battery Management System (BMS) can be integrated with the busbar and battery cell cooling system disclosed herein, further reducing the number of components of the battery pack. The battery pack cooling system disclosed in the present invention also allows for a compact construction of the battery pack ensuring modularity of the battery pack as the cooling system is integrated with the busbars. The battery pack disclosed can be employed in any type of vehicle including two-wheeled and three-wheeled vehicles and heavy power tools that use high-capacity batteries that need active cooling. Other advantages include increased durability, better aesthetics, better ergonomics and overall weight reduction.

While the present invention has been described with respect to certain embodiments, it will be apparent to those skilled in the art that various changes and modifications may be made without departing from the scope of the invention as defined in the following claims.

### List of Reference Numerals:

- 10: - battery pack
- 20: - casing
- 22: - base wall
- 24: - one or more side walls
- 26: - top wall
- 28: - plurality of fins
- 30: - busbar
- 32: - first surface of busbar
- 34: - plurality of first leads of busbar
- 40: - heat pipe
- 42: - one or more internal channels of heat pipe
- 44: - plurality of second leads of heat pipe
- 46: - wick of heat pipe
- 48: - working fluid of heat pipe
- 50: - interface between heat pipe and busbar
- 52: - thermal paste
- 60: - cooling tube
- 62: - coolant
- 64: - inlet of the cooling tube
- 66: - outlet of the cooling tube
- 68: - connecting pipe

## Claims

1. A battery pack (10) comprising:
a casing (20) enclosing a plurality of battery cells;
at least one busbar (30) electrically interconnecting two or more of the plurality of battery cells; and
a heat pipe (40) integrated with the at least one busbar (30), the heat pipe (40) configured to uniformly dissipate heat from the busbar (30) and the corresponding battery cells electrically connected by the busbar (30).

2. The battery pack (10) as claimed in claim 1, wherein the heat pipe (40) being disposed on a first surface (32) of the at least one busbar (30), and the heat pipe (40) and the busbar (30) being fused together to enable maximum surface contact between them.

3. The battery pack (10) as claimed in claim 2, wherein the heat pipe (40) having a lower surface area than the busbar (30), such that an area of surface contact between the busbar (30) and the heat pipe (40) being lesser than an area of the first surface (32) of the busbar (30).

4. The battery pack (10) as claimed in claim 2, wherein the heat pipe (40) and the busbar (30) have same surface area, such that an area of surface contact between the busbar (30) and the heat pipe (40) being equal to an area of the first surface (32) of the busbar (30).

5. The battery pack (10) as claimed in claim 2 comprising a thermal paste (52) being disposed at an interface (50) between the heat pipe (40) and the busbar (30) for effective heat dissipation.

6. The battery pack (10) as claimed in claim 2, wherein the busbar (30) comprising a plurality of first leads (34), the first leads (34) projecting towards the plurality of battery cells, and, the first leads (34) being configured to establish electrical contact and thermal contact with terminals (14) of the corresponding battery cells electrically connected by the busbar (30).

7. The battery pack (10) as claimed in claim 6, wherein the heat pipe (40) comprising a plurality of second leads (44) corresponding to the plurality of first leads (34), the second leads (44) configured to establish thermal contact with the corresponding first leads (34).

8. The battery pack (10) as claimed in claim 1, wherein the heat pipe (40) being disposed internally of the at least one busbar (30), and the busbar (30) being configured to simultaneously conduct electric current between and uniformly dissipate heat from the corresponding battery cells electrically connected by the busbar (30).

9. The battery pack (10) as claimed in claim 8, wherein the busbar (30) comprising a plurality of first leads (34), the first leads (34) projecting towards the plurality of battery cells, and the first leads (34) configured to establish electrical contact and thermal contact with terminals (14) of the corresponding battery cells electrically connected by the busbar (30).

10. The battery pack (10) as claimed in claim 1 comprising at least one cooling tube (60), the at least one cooling tube (60) configured to dissipate heat from the heat pipe (40) integrated with the at least one busbar (30) to an exterior of the casing (20) via a coolant (62) flowing through the at least one cooling tube (60), wherein the at least one cooling tube (60) comprising an inlet (64) and an outlet (66), a portion of the at least one cooling tube (60) between the inlet (64) and the outlet (66) being disposed inside the casing (20), the coolant (62) entering the at least one cooling tube (60) through the inlet (64) and exiting the at least one cooling tube (60) through the outlet (66), the coolant (62) configured to absorb heat from the heat pipe (40).

11. The battery pack (10) as claimed in claim 10 comprising: a pair of the cooling tubes (60), the pair of cooling tubes (60) disposed at opposite ends of the casing (20); and a plurality of connecting pipes (68) interconnecting the pair of cooling tubes (60) to enable flow of the coolant (62) between the pair of cooling tubes (60), at least one of the plurality of connecting pipes (68) being disposed on the heat pipe (40) integrated with the at least one busbar (30) and configured to be in thermal communication with the heat pipe (40).

12. The battery pack (10) as claimed in claims 8 and 10, wherein the at least one busbar (30) comprising an internal conduit (36) overlapping with the heat pipe (40) disposed internally of the busbar (30), the internal conduit (36) being in thermal communication with the heat pipe (40), and the internal conduit (36) configured to enable the coolant (62) flowing through the cooling tube (60) to flow through the internal conduit (36).

13. The battery pack (10) as claimed in claim 12, wherein the internal conduit (36) comprising a plurality of perforations (38), the plurality of perforations (38) configured to enable ingress of the coolant (62) into and egress of the coolant (62) from the internal conduit (36) from the pair cooling tubes (60), the coolant (62) flowing through the internal conduit (36) configured to absorb heat from the heat pipe (40).

14. The battery pack (10) as claimed in claim 1, wherein the heat pipe (40) comprising one or more internal channels (42) configured to allow flow of a working fluid (48) of the heat pipe (40).

15. The battery pack (10) as claimed in claims 10 and 14, wherein the one or more internal channels (42) of the heat pipe (40) being in thermal communication with the at least one cooling tube (60).

16. The battery pack (10) as claimed in claim 1, wherein the casing (20) comprising a plurality of fins (28) projecting outwardly of the casing (20) and configured to dissipate heat from the heat pipe (40) to an exterior of the casing (20).
